# EUROPÄISCHE PATENTSCHRIFT

(11) **EP 4 533 128 B1**
(45) Veröffentlichungstag und Bekanntmachung des Hinweises auf die Patenterteilung: **26.08.2026**
(21) Anmeldenummer: 23729037.4
(22) Anmeldetag: 22.05.2023
(51) Int. Cl.: G01S 7/521, G01S 15/10, G01S 7/524, G01S 15/34, B06B 1/02, G01S 15/00, B06B 1/06, G10K 11/00

(54) **HYDROAKUSTISCHES SCHALLSENDERARRAY**
HYDROACOUSTIC SOUND TRANSMITTER ARRAY
RÉSEAU D'ÉMETTEURS DE SONS HYDROACOUSTIQUES

(30) Priorität: 31.05.2022 DE 102022205472
(43) Veröffentlichungstag der Anmeldung: 09.04.2025
(73) Patentinhaber: TKMS ATLAS ELEKTRONIK GmbH, 28309 Bremen (DE); thyssenkrupp AG, 45143 Essen (DE)
(72) Erfinder: BOCHENTIN, Thorsten, 28209 Bremen (DE)
(74) Vertreter: thyssenkrupp Intellectual Property GmbH
(86) Internationale Anmeldenummer: PCT/EP2023/063616
(87) Internationale Veröffentlichungsnummer: WO 2023/232535

(56) Entgegenhaltungen:
- FR-A1- 2 958 047
- FR-B1- 2 765 447
- US-A1- 2021 389 440
- SARANGAPANI SAIRAJAN: "Multi-frequency Phased Array Transducer for ADCP Applications", OCEANS 2022 - CHENNAI, IEEE, 21 February 2022 (2022-02-21), pages 1 - 10, XP034125725, DOI: 10.1109/OCEANSCHENNAI45887.2022.9775469

## Beschreibung

Die Erfindung bezieht sich auf ein hydroakustisches Schallsendearray, d.h. beispielsweise eine Anordnung von Wasserschallsendern, insbesondere Hydrophonen.

Hydroakustische Schallsendearrays (nachfolgend überwiegend nur als Schallsendearrays bezeichnet) werden typischerweise zum Aussenden von Wasserschallsignalen als Teil eines Aktivsonars verwendet. Die Wasserschallsignale können verschiedene Längen aufweisen. So werden kurze Wasserschallsignale verwendet, wenn ein Schallsendearray gleichzeitig auch die Funktion eines hydroakustischen Schallempfangsarrays einnimmt. In diesem Fall ist das Aussenden eines kurzen Schallpulses vorteilhaft, da in der Zeit, in der Schall ausgesendet wird, keine Reflexionen empfangen werden können. Ferner sind jedoch auch Schallsendearrays bekannt, die ausschließlich zum Aussenden von Wasserschall verwendet werden. Dann können Wasserschallsignale beliebiger Länge eingesetzt werden. In diesem Fall sind an einem Wasserfahrzeug Wasserschallempfänger, insbesondere Schallempfangsarrays angeordnet, um die Schallreflexionen zu empfangen.

Anders als bei dem gepulsten Senden der Wasserschallsignale und anschließendem Empfang der Reflexionen kann bei längeren bzw. konstanten Schallsignalen eine Entfernungsbestimmung jedoch nicht ausschließlich über die Bestimmung der Laufzeit der Wasserschallsignale erfolgen. Vielmehr wird ein frequenzmoduliertes Signal ausgesendet, so dass die Entfernung zu einem Objekt, dass das Wasserschallsignal reflektiert hat, u.a. basierend auf der Empfangsfrequenz und Phasenverschiebung des reflektierten Wasserschallsignals ermittelt.

Das Design von derzeitigen Wasserschallsendewandlerarrays weist eine Limitierung der Bandbreite des ausgesendeten Wasserschallsignals auf. So sind der oder die enthaltenen Wasserschallsendewandler für eine Designfrequenz optimiert, die Bandbreite wird dann beispielsweise bei der Frequenz bestimmt, bei der der oder die Wasserschallsendewandler einen Leistungsabfall von 3dB aufweisen. Ziel ist es jedoch, eine möglichst große Bandbreite zu erhalten. Dies hat verschiedene Vorteile.

So sind Schallsignale mit größerer Bandbreite besser geeignet für die Anwendung von Verfahren der Störgeräuschunterdrückung. Ferner kann bei größerer Bandbreite des Signals bei gegebenem Umwelt- oder Technik-bedingten maximalen Schalldruck und gegebener Empfangsleistung über mathematische Verfahren eine bessere Ortungsleistung erreicht werden. Bei frequenzmodulierten Signalen ermöglicht eine größere Bandbreite mehr Spielraum für die Gestaltung des Sendesignals, wodurch bessere Kontraste beim Empfang für Dopplereffekt und Phasenverschiebung erzielt werden können und sich ein breiteres "Range Gate" in der Entfernungsbestimmung bietet.

SARANGAPANI SAIRAJAN: "Multi-frequency Phased Array Transducer for ADCP 12-14 Applications", OCEANS 2022 - CHENNAI, IEEE, 21. Februar 2022 (2022-02-21), Seiten 1-10, XP034125725, DOI: 10.1109/OCEANSCHENNAI45887.2022.9775469 offenbart einen mehrfrequenten Phased-Array Wandler.

FR 2 765 447 B1 offenbart ein akustischen Sendearray zur Ölsuche auf dem Meeresboden.

US 2021/389440 A1 offenbart eine akustische Sendeantenne für ein Sonar.

FR 2 958 047 A1 offenbart ein aktives Nahbereichssonar mit für ein U-Boot.

Die Aufgabe der vorliegenden Erfindung besteht deshalb darin, ein verbessertes Konzept für hydroakustische Schallsendearrays zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen ein hydroakustisches Schallsendearray zum Aussenden eines frequenzmodulierten Wasserschallsignals. Das hydroakustische Schallsendearray wird auch als Wasserschallsendearray oder vereinfacht in dieser Offenbarung als Schallsendearray bezeichnet. Das Schallsendearray umfasst eine Mehrzahl von hydroakustischen Schallsendewandlern, zumindest mit einem ersten Schallsendewandler einem zweiten Schallsendewandler. Erfindungsgemäß sind die Schallsendewandler der Mehrzahl von Schallsendewandlern senkrecht zu einer Hauptabstrahlrichtung des Schallsendearrys bzw. zumindest eines Schallsendewandlers der Mehrzahl von Schallsendewandler angeordnet. Als Hauptabstrahlrichtung wird die Richtung angesehen, in die das Schallsendearray aufgrund der relativen Anordnung der individuellen Schallsendewandler die höchste konstruktive Interferenz in der Design- bzw. Mittelfrequenz und damit die größte Sendeleistung aufweist oder zumindest theoretisch aufweisen kann.

Der erste und der zweite Schallsendewandler weisen eine jeweils eine Designfrequenz auf. Die Designfrequenz des ersten Schallsendewandlers wird auch als erste Designfrequenz bezeichnet. Die Designfrequenz des zweiten Schallsendewandlers wird auch als zweite Designfrequenz bezeichnet. Die erste und die zweite Designfrequenz unterscheiden sich. Als Designfrequenz wird typischerweise die Frequenz angesehen, bei der ein Schallsendewandler die größte Schallleistung abstrahlt. In der Regel handelt es sich um die Mittelfrequenz. Typischerweise ist die Designfrequenz abhängig von einer Größe (z.B. einem Durchmesser) des Schallsendewandlers. D.h. der erste Schallsendewandler kann einen ersten Durchmesser aufweisen, um die erste Designfrequenz einzustellen und der zweite Schallsendewandler kann einen zweiten Durchmesser aufweist, um die zweite Designfrequenz einzustellen, wobei sich die der erste Durchmesser von dem zweiten Durchmesser unterscheidet. In einer äquivalenten Betrachtung weisen der erste und der zweite Schallsendewandler unterschiedliche Abstrahlcharakteristiken auf. Als Abstrahlcharakteristik wird beispielsweise eine Funktion der abgestrahlten Leistung über der Frequenz (bei gleicher Eingangsleistung) bezeichnet. Die Designfrequenz kann das Maximum der Abstrahlcharakteristik darstellen.

Ein Abstand zwischen dem ersten Schallsendewandler und dem zweiten Schallsendewandler ist derart gewählt, dass der Abstand zwischen der halben Wellenlänge der ersten Designfrequenz und der halben Wellenlänge der zweiten Designfrequenz liegt. Bevorzugt entspricht der Abstand zwischen dem ersten Schallsendewandler und dem zweiten Schallsendewandler der halben Wellenlänge eines Schnittpunkts einer Abstrahlcharakteristik des ersten Schallsendewandlers und einer Abstrahlcharakteristik des zweiten Schallsendewandlers. Hierbei ist jedoch zu berücksichtigen, dass der Abstand eine Abweichung von bis zu 20%, beispielsweise bis zu 10%, bevorzugt bis zu 5%, besonders bevorzugt bis zu 1 % der Wellenlänge des Schnittpunkts aufweisen darf. Als Schnittpunkt der Abstrahlcharakteristiken wird der Schnittpunkt angesehen, der zwischen den Designfrequenzen des ersten und des zweiten Schallsendewandlers liegt. Weitere Schnittpunkte der Abstrahlcharakteristiken bleiben unberücksichtigt.

Erfindungsgemäß wird der Abstand senkrecht zu einer Hauptabstrahlrichtung des Schallsendearrays oder senkrecht zu einer Hauptabstrahlrichtung des ersten Schallsendewandlers bzw. ergänzend oder alternativ des zweiten Schallsendewandlers gemessen.

Idee ist es somit, durch Verwendung von unterschiedlichen Schallsendewandlern, d.h. Schallsendewandlern mit unterschiedlichen Designfrequenzen, die Bandbreite des Schallsendearrays zu erhöhen. Werden die Schallsendewandler wie bisher äquidistant angeordnet, ist jedoch die Sendeleistung des Schallsendearrays nicht mehr optimal. Dadurch, dass die Wasserschallsendewandler nicht äquidistant angeordnet sind, wird die Sendeleistung des Schallsendearrays verbessert, konstruktive Interferenz über die gesamte Bandbreite des Schallsignals maximiert bzw. destruktive Interferenz minimiert.

Diese Anordnung von Schallsendewandlern in dem hydroakustischen Schallsendearray ist nicht auf zwei Schallsendewandler beschränkt, sondern kann prinzipiell auf beliebig viele Schallsendewandler erweitert werden. Beispielhaft wird die Erweiterung basierend auf drei Schallsendewandler beschrieben. Der Abstand zwischen dem ersten und dem zweiten Schallsendewandler wird bei mehr als zwei Schallsendewandlern in dem Array als erster Abstand bezeichnet.

Der erste Schallsendewandler ist von dem zweiten und dem dritten Schallsendewandler sowie von einem oder mehreren optionalen weiteren Schallsendewandlern verschieden. Der optionale weitere Schallsendewandler oder eine beliebige Auswahl der optionalen weiteren Schallsendewandler können jedoch auch mit dem ersten Schallsendewandler identisch sein. Beispielsweise unterscheidet sich der erste Schallsendewandler von dem zweiten und dem dritten Schallsendewandler durch seine Designfrequenz.

Der erste Schallsendewandler und der zweite Schallsendewandler weisen einen ersten Abstand zueinander auf und der zweite Schallsendewandler und dritte Schallsendewandler weisen einen zweiten Abstand zueinander auf. Der erste Abstand und der zweite Abstand sind voneinander verschieden. In anderen Worten weisen die drei Schallsendewandler im Gegensatz zur konventionellen Schallsendearrays mit nur einer Art von Schallsendewandlern (d.h. mit ausschließlich identischen Schallsendewandlern) mit gleicher Designfrequenz die Abwesenheit einer äquidistanten Anordnung auf. Die Schallsendewandler werden bei konventionellen Schallsendearrays mit einem Abstand zueinander angeordnet, die der halben Wellenlänge (*λ*/2) der Designfrequenz entspricht. Dadurch ist es möglich über konstruktive Interferenz, die abgestrahlte Leistung des Schallsendearrays in eine Hauptabstrahlrichtung der Schallsendearrays zu maximieren. Vorteilhafterweise wird der erste und der zweite Abstand senkrecht zu einer Hauptabstrahlrichtung des Schallsendearrays oder senkrecht zu einer Hauptabstrahlrichtung des ersten bzw. ergänzend oder alternativ des zweiten Schallsendewandlers gemessen.

Vorteilhafterweise wird der erste Abstand in Abhängigkeit von einer Abstrahlcharakteristik des ersten und des zweiten Schallsendewandlers und der zweite Abstand in Abhängigkeit von einer Abstrahlcharakteristik des zweiten und des dritten Schallsendewandlers gewählt. Beispielsweise entspricht der erste Abstand im Wesentlichen der halben Wellenlänge einer Frequenz, bei der sich eine Abstrahlcharakteristik des ersten und des zweiten Schallsendewandlers über der Sendefrequenz schneiden.

Der zweite Abstand kann im Wesentlichen der halben Wellenlänge einer Frequenz entsprechen, bei der sich eine Abstrahlcharakteristik des zweite und des dritten Schallsendewandlers über der Sendefrequenz schneiden, wenn der zweite Schallsendewandler ebenfalls von dem dritten Schallsendewandler verschieden ist, d.h. insbesondere verschiedene Abstrahlcharakteristiken aufweisen. In anderen Worten kann der zweite Abstand der halben Wellenlänge eines Schnittpunkts einer Abstrahlcharakteristik des zweiten Schallsendewandlers und einer Abstrahlcharakteristik des dritten Schallsendewandlers entsprechen, wobei der Abstand eine Abweichung von bis zu 20%, beispielsweise bis zu 10%, bevorzugt bis zu 5%, besonders bevorzugt bis zu 1% der Wellenlänge des Schnittpunkts aufweisen darf. Alternativ kann der zweite Abstand im Wesentlichen der halben Wellenlänge einer Designfrequenz des zweiten und des dritten Schallsendewanders entsprechen, wenn der zweite Schallsendewandler und der dritte Schallsendewandler identisch sind, d.h. insbesondere die gleiche Abstrahlcharakteristik aufweisen.

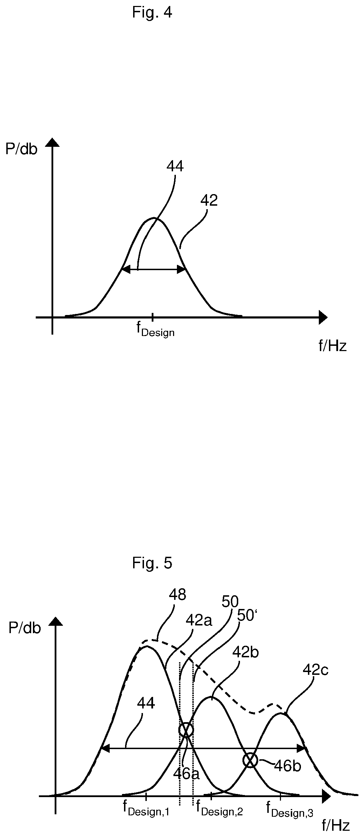

In Ausführungsbeispielen umfasst das Schallsenderarray einen Signalgenerator. Der Signalgenerator ist ausgebildet, die Schallsendewandler der Mehrzahl von Schallsendewandlern mit einem frequenzmodulierten Sendesignal anzusteuern, so dass die individuellen Schallsendewandler das frequenzmodulierte Wasserschallsignal koordiniert aussenden. Unter koordiniertem Aussenden kann verstanden werden, dass die jeweiligen Schallsendewandler des Schallsendearrays im Zeitverlauf eines, beispielsweise frequenzmodulierten, Signals gemäß ihrer individuellen Sendecharakteristik einzeln angesteuert werden, um das Gesamtsignal auf der Ebene des Schallsendearrays zu erzeugen (vgl. Fig 5).

In anderen Worten ist es möglich, ein Sendesignal z.B. mittels einer Frequenzanalyse, beispielsweise einer Fouriertransformation, in seine Frequenzanteile zu zerlegen. Die Frequenzanteile können dann über denjenigen Schallsendewandler ausgesendet werden, der für die Abstrahlung der Frequenzen optimiert ist. So kann pro Schallsendewandler ein Frequenzbereich festgelegt werden, in dem der Schallsendewandler optimiert abstrahlen kann. Ein pro (Abtast-) Zeitpunkt monofrequentes, aber über der Zeit frequenzvariables Signal kann ferner über den Schallsendewandler abgestrahlt werden, der für das Aussenden der entsprechenden Frequenz optimiert ist. Hat ein solches zu einem Zeitpunkt monofrequentes Signal kontinuierlich ansteigende oder abfallende Frequenzen (oder beides nacheinander) über der Zeit, wird ein solches Signal auch als Sweep bezeichnet.

Es gibt nun verschiedene Definitionen dafür, wann ein Schallsendewandler für das Abstrahlen einer Frequenz optimiert ist. Eine Option kann es sein, dass der Schallsendewandler des Schallsendearrays für das Aussenden einer Frequenz optimiert ist, dessen Designfrequenz im Vergleich zu der Designfrequenz der anderen Schallsendewandlern am nächsten an der Sendefrequenz liegt. Eine andere Option kann es sein, dass die Abstrahlcharakteristiken der Schallsendewandler betrachtet werden. Die Abstrahlcharakteristiken benachbarter Schallsendewandler kreuzen sich, wenn man das gesamte Spektrum des Schallsendearrays betrachtet. Es kann nun der Schallsendewandler für das Aussenden einer Frequenz optimiert sein, der keinen Schnittpunkt mit einem benachbarten Schallsendewandler zwischen dessen Designfrequenz und der auszusendenden Frequenz aufweist.

Ferner kann als koordiniertes Aussenden bezeichnet werden, dass die Schallsendewandler der Mehrzahl von Schallsendewandlern gleichzeitig mit dem Sendesignal beaufschlagt werden. Durch die unterschiedlichen Abstrahlcharakteristiken werden Signalfrequenzen, für die ein Schallsendewandler nicht ideal ist, mit einer geringeren Leistung abgestrahlt als mit einem Schallsendewandler der Mehrzahl von Schallsendewandlern, der für die entsprechende Frequenz besser geeignet ist. Durch Überlagerung entsteht so in einem breiten Frequenzbereich zwischen den Designfrequenzen ein homogenes resultierendes ausgesendetes Signal.

Das frequenzmodulierte Wasserschallsignal kann reflektiert und von Wasserschallempfängern empfangen werden um Objekte, die das Wasserschallsignal reflektiert haben, zu detektieren.

In einem weiteren Ausführungsbeispiel weist das Schallsendearray einen Kommunikationsprozessor auf, der eine Nachricht kodieren und die Schallsendewandler der Mehrzahl von Schallsendewandlern derart ansteuern kann, so dass dieselben die kodierte Nachricht als frequenzmoduliertes Wasserschallsignal aussenden. D.h., das Schallsendearray kann auch für die Unterwasserkommunikation vorteilhafterweise eingesetzt werden. Der Vorteil liegt hier darin, dass aufgrund der höheren Bandbreite in gleicher Zeit mehr Informationen gesendet werden können.

Ferner ist ein Wasserfahrzeug offenbart, dass das hydroakustische Schallsendearray aufweist. In einem vorderen Bereich des Wasserfahrzeugs ist eine Sonarempfangsantenne angeordnet. Als vorderer Bereich wird das vordere Drittel, bevorzugt das vordere Viertel und besonders bevorzugt das vordere Fünftel des Wasserfahrzeugs angesehen. Die Sonarempfangsantenne kann z.B. ein Hull Mounted Sonar (dt.: rumpfmontiertes Sonar) sein. Ferner weist das Wasserfahrzeug eine Schleppantenne auf. Beide Antennen sind ausgebildet, das frequenzmodulierte Wasserschallsignal zu empfangen. Vorteilhafterweise werden die Sonarempfangsantennen ausschließlich zum Empfang von Wasserschall eingesetzt. In diesem Fall können diese durchgehend Reflexionen empfangen und es entstehen keine toten Entfernungsbereiche durch das Abwarten, bis ein Schallpuls ausgesendet ist. Das Schallsendearray kann zwischen der Sonarempfangsantenne und der Schleppantenne angeordnet sein. Beispielsweise ist das Schallsendearray seitlich oder unterhalb des Rumpfes an dem Wasserfahrzeug angeordnet.

Analog ist ein Verfahren zur Herstellung eines Schallsendearrays zum Aussenden eines frequenzmodulierten Wasserschallsignals mit folgenden Schritten offenbart: - Bereitstellen einer Mehrzahl von Schallsendewandlern umfassend einen ersten Schallsendewandler (24a) und einen zweiten Schallsendewandler (24b) wobei der erste Schallsendewandler (24a) eine erste Designfrequenz aufweist und wobei der zweite Schallsendewandler (24b, 24c) eine zweite Designfrequenz aufweist, wobei sich die erste Designfrequenz von der zweiten Designfrequenz unterscheidet; - Anordnen der Schallsendewandler (24) der Mehrzahl von Schallsendewandlern senkrecht zu einer Hauptabstrahlrichtung des Schallsendearrays (20) oder des ersten und/oder des zweiten Schallsendewandlers (24a, 24b);- Anordnen des ersten Schallsendewandlers und des zweiten Schallsendewandlers in einem Abstand zueinander, der derart gewählt ist, dass der Abstand zwischen der halben Wellenlänge der ersten Designfrequenz und der halben Wellenlänge der zweiten Designfrequenz liegt, wobei der Abstand senkrecht zu einer Hauptabstrahlrichtung des Schallsendearrays gemessen ist.

Weiterhin ist ein hydroakustisches Schallsendearray zum Aussenden eines frequenzmodulierten Wasserschallsignals offenbart. Das Schallsendearray umfasst eine Mehrzahl von hydroakustischen Schallsendewandlern, zumindest mit einem ersten Schallsendewandler einem zweiten Schallsendewandler und einem dritten Schallsendewandler. Der erste Schallsendewandler ist von dem zweiten und dem dritten Schallsendewandler sowie von einem oder mehreren optionalen weiteren Schallsendewandlern verschieden. Der optionale weitere Schallsendewandler oder eine beliebige Auswahl der optionalen weiteren Schallsendewandler können jedoch auch mit dem ersten Schallsendewandler identisch sein. Beispielsweise unterscheidet sich der erste Schallsendewandler von dem zweiten und dem dritten Schallsendewandler durch seine Designfrequenz.

Bevorzugte Ausführungsbeispiele der vorliegenden Erfindung werden nachfolgend Bezug nehmend auf die beiliegenden Zeichnungen erläutert. Es zeigen:
Fig. 1: eine schematische perspektivische Darstellung eines hydroakustischen Schallsendearrays gemäß einem Ausführungsbeispiel mit zwei Schallsendewandlern;
Fig. 2: eine schematische perspektivische Darstellung eines hydroakustischen Schallsendearrays gemäß einem Ausführungsbeispiel mit drei Schallsendewandlern;
Fig. 3: eine schematische Draufsicht auf ein Wasserfahrzeug gemäß einem Ausführungsbeispiel mit dem Schallsendearray in einer beliebigen Ausführungsform;
Fig. 4: eine schematische Darstellung einer Abstrahlcharakteristik eines Schallsendewandlers in einem Diagramm einer Sendeleistung über einer Sendefrequenz;
Fig. 5: eine schematische Darstellung von Abstrahlcharakteristiken dreier Schallsendewandler in einem Diagramm einer Sendeleistung über einer Sendefrequenz; und
Fig. 6: ein schematisches frequenzmoduliertes Sendesignal in einem Diagramm der Frequenz (f) über der Zeit (t).

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

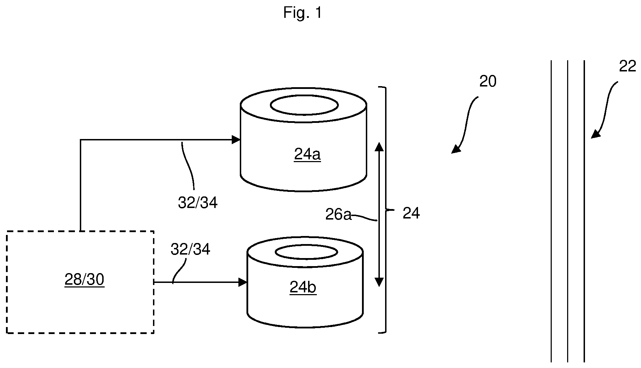

Fig. 1 zeigt ein hydroakustisches Schallsendearray 20 zum Aussenden eines frequenzmodulierten Wasserschallsignals 22, hier als Fernfelddarstellung idealisiert als ebene Welle. Das Schallsendearray 20 umfasst eine Mehrzahl von Schallsendewandlern 24 mit zumindest einem ersten Schallsendewandler 24a und einem zweiten Schallsendewandler 24b. Der erste Schallsendewandler 24a ist von dem zweiten Schallsendewandler 24b verschieden. Die beiden Schallsendewandler weisen unterschiedliche Designfrequenzen auf. Ein Abstand 26a zwischen dem ersten Schallsendewandler 24a und dem zweiten Schallsendewandler 24b ist ferner so gewählt, dass der Abstand 26a zwischen der halben Wellenlänge der ersten Designfrequenz und der halben Wellenlänge der zweiten Designfrequenz liegt. Das heißt, die Wellenlängen der Designfrequenzen der beiden Schallsendewandler 24a, 24b werden ermittelt. Der Abstand 26a weist nun einen Wert auf, der kleiner oder gleich, bevorzugt kleiner, ist als die obere Wellenlänge und größer oder gleich, bevorzugt größer, ist als die untere Wellenlänge. Der Abstand 26a kann als Mittenabstand der beiden Schallsendewandler 24a, 24b angesehen werden.

Optional weist das Schallsendearray 20 einen Signalgenerator 28 und/oder einen Kommunikationsprozessor 30 auf. Der Signalgenerator kann das Schallsendearray 24 der Mehrzahl von Schallsendewandlern gleichzeitig und koordiniert mit einem frequenzmodulierten Sendesignal 32 ansteuern, so dass die Schallsendewandler gemeinsam das frequenzmodulierte Wasserschallsignal aussenden.

Der ergänzend oder alternativ zu dem Signalgenerator 28 offenbarte Kommunikationsprozessor 30 kann eine Nachricht kodieren und das Schallsendearray 20 bzw. die Schallsendewandler 24 der Mehrzahl von Schallsendewandlern derart ansteuern, dass dieselben die kodierte Nachricht 34 als frequenzmoduliertes Wasserschallsignal aussenden.

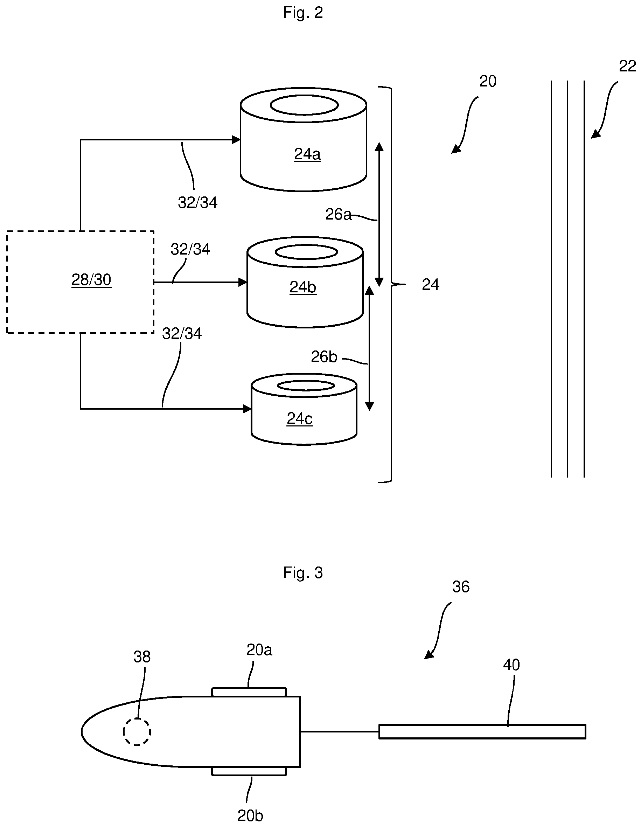

Fig. 2 zeigt das hydroakustische Schallsendearray aus Fig. 1, jedoch um einen weiteren, dritten Schallsendewandler erweitert. Der erste Schallsendewandler 24a ist von dem zweiten und dem dritten Schallsendewandler 24b, 24c verschieden. In Fig. 2 dargestellt ist auch der zweite Schallsendewandler 24b von dem dritten Schallsendewandler 24c verschieden. Dies ist jedoch nicht zwingend nötig.

Der erste Schallsendewandler 24a und der zweite Schallsendewandler 24b weisen einen ersten Abstand 26a zueinander auf. Der zweite Schallsendewandler 24b und der dritte Schallsendewandler 24c weisen einen zweiten Abstand 26b zueinander auf, wobei der erste Abstand 26a und der zweite Abstand 26b voneinander verschieden sind. Der Abstand 26a, 26b kann wie in Fig. 2 dargestellt als Mittenabstand von zwei benachbarten Schallsendewandlern angesehen werden.

Fig. 3 zeigt eine schematische Draufsicht eines Wasserfahrzeugs 36. Das Wasserfahrzeug 36 weist, beispielsweise am Rumpf, zwei Schallsendearrays 20a, 20b auf. Bei den Schallsendearrays 20a, 20b kann es sich um das Schallsendearray handeln, das in Fig. 2 dargestellt worden ist. Dies ist ein sogenanntes "free flooded Rings" Array, das aus drei Hohlzylindern 24a, 24b, 24c als Schallsendewandler aufgebaut ist. Die Hohlzylinder weisen jeweils unterschiedliche Größen und somit auch unterschiedliche Designfrequenzen auf. Es sind jedoch ferner auch andere Ausgestaltungen des Schallsendearrays möglich. Aus folgender, nicht abschließender, Aufzählung kann eine Modifikation oder eine Kombination von Modifikationen ausgewählt werden: eine größere Anzahl von Schallsendewandlern; teilweise Verwendung von identischen Schallsendern, wobei die identischen Schallsendewandler typischerweise benachbart zueinander angeordnet sind; anders geformte Schallsendewandler, beispielsweise in Form eines Torus, eines Tonpilzes oder einer Scheibe (sogenannte "flex disc") statt der Hohlzylinderform; eine andere Arrayform, insbesondere ein, optional auch komplexer ausgeformtes, Flächenarray oder ein lineares Array statt eines Säulenarrays.

Das Wasserfahrzeug 36 weist ferner eine im vorderen Bereich des Wasserfahrzeugs angeordneten Sonarempfangsantenne 38, beispielsweise in Form eines "Hull mounted Sonars (HMS)" und einer Schleppantenne 40 auf. Beide Antennen 38, 40 sind ausgebildet, das frequenzmodulierte Wasserschallsignal zu empfangen. Vorteilhaft an dieser Anordnung ist, dass in dieser Anordnung ein größtmöglicher Abstand des (bevorzugt ausschließlich zum Senden verwendeten) Schallsendearrays zu den (bevorzugt ausschließlich zum Empfangen verwendeten) Antennen bei gleichzeitiger optimierter Rundumsicht um das Wasserfahrzeug hergestellt wird.

Die feste Anbringung des Schallsendearray am Rumpf ermöglicht eine einfachere und eventuell bessere Erlangung vertikaler Direktivität, um das Schallsignal in die für die Ortung wichtige Horizontale zu maximieren. Ohne einen geschleppten Sendekörper kann die gesamte Sonarinstallation kostengünstiger, kompakter, robuster und einfacher in der Anwendung, insbesondere im Flachwasser oder bei höherem Seegang und/oder höheren Schiffsgeschwindigkeiten, ausgestaltet werden.

Eine Anordnung des Schallsendearrays in einem Schleppkörper der Schleppantenne ist jedoch ebenfalls möglich. Typischerweise ist der Schleppkörper mit dem Wasserfahrzeug verbunden. An dem Schleppkörper wird dann in einem ersten Fall ("single tow", Einzelschlepp) die eigentliche Schleppantenne befestigt. In einem zweiten Fall ("dual tow", Doppelschlepp) besitzt die Schleppantenne eine eigene separate Schleppverbindung zum Schiff. In beiden Fällen ist der Schleppkörper zwischen der Schleppantenne und dem Wasserfahrzeug angeordnet. Beim Doppelschlepp geschieht dies, indem die Schleppdrahtlänge und seine Auftriebs- und hydrodynamischen Eigenschaften bewusst so gewählt werden.

Fig. 4 zeigt eine schematische Abstrahlcharakteristik 42 als Diagramm der Frequenz (f in Hertz) über der Schallsendeleistung (P in Dezibel) eines Schallsenders. Die Abstrahlcharakteristik hat in diesem idealisierten Beispiel die Form einer Gauß-Kurve (auch als Glockenkurve bezeichnet). Eine Designfrequenz f_{Design} ist die Frequenz, bei der der Schallsendewandler ein Maximum der Schallsendeleistung aufweist, im Beispielfall ist dies auch die Mittelfrequenz. Ferner weist der Schallsendewandler eine Bandbreite 44 auf. Diese wird beispielsweise als Differenz der beiden Frequenzen bestimmt, bei denen die Schallsendeleistung um 3dB gegenüber der Schallsendeleistung bei der Designfrequenz abgefallen ist. Ein Schallsendearray mit einer Mehrzahl von Schallsendewandlern, die jeweils die in Fig. 4 gezeigte Abstrahlcharakteristik aufweisen, weisen vorteilhafterweise einen Abstand zueinander auf, der der halben Wellenlänge der zu der Designfrequenz zugehörigen Wellenlänge entspricht.

Fig. 5 zeigt eine schematische Abstrahlcharakteristik 42a, 42b, 42c von drei verschiedenen Schallsendewandlern. Die Schallsendewandler weisen jeweils eine eigene Designfrequenz f_{Design,1}, f_{Design,2}, f_{Design,3} auf. Hier ist es jedoch nicht offensichtlich, wie die Abstände von den Schallsendewandlern gewählt werden sollten, um die Abstrahlcharakteristik des aus den Schallsendewandlern gebildeten Schallsendearrays zu optimieren. Hier hat sich herausgestellt, dass der Abstand zwischen zwei Schallsendewandler so gewählt werden sollte, dass dieser im Wesentlichen der halben Wellenlänge einer Frequenz entspricht, bei der sich eine Abstrahlcharakteristik des ersten und des zweiten Schallsenders über der Sendefrequenz schneiden. Der Schnittpunkt 46a, 46b der Abstrahlcharakteristiken ist in Fig. 5 eingekreist. Schneiden sich die Abstrahlcharakteristiken an mehreren Punkten, wird der Schnittpunkt gewählt, der zwischen den Designfrequenzen der zugehörigen Schallwandler liegt.

Bei einer Auswahl der Schallsendewandler für das Schallsendearray kann das Kriterium, dass benachbarte Schallsendewandler einen Schnittpunkt in der Abstrahlcharakteristik aufweisen, der zwischen den beiden Designfrequenzen liegt, herangezogen werden. Ferner können die Schallsendewandler derart ausgewählt werden, dass sich die Abstrahlcharakteristiken zweier benachbarter Schallsendewandler in der Nähe eines Wendepunkts oder beider Wendepunkte der Abstrahlcharakteristiken schneiden. In der Nähe kann bedeuten, dass zumindest einer der beiden Wendepunkte oder auch beide Wendepunkte innerhalb eines vorbestimmten Fensters um den Schnittpunkt der Abstrahlcharakteristik liegen. Das Fenster kann eine Größe von ±10%, bevorzugt ±5%, besonders bevorzugt ±2% der Differenz der Designfrequenzen (z.B. f_{Design,2} - f_{Design,1)} der beiden benachbarten Schallsendewandlern um den Schnittpunkt aufweisen. Somit lässt sich die resultierende Bandbreite des Schallsendearrays bei vorgegebener Anzahl von Schallsendewandlern optimieren. Ein beispielhaftes Fenster um den Schnittpunkt der Abstrahlcharakteristiken des ersten und des zweiten Schallsendewandlers liegt in dem durch die gestrichelten Geraden 50, 50' begrenzten Bereich.

Ferner ist in Fig. 5 äußerst schematisch eine resultierende Abstrahlcharakteristik 48 der drei Wasserschallwandler gestrichelt dargestellt. Diese ergibt sich aus der additiven Überlagerung der drei einzelnen Abstrahlcharakteristiken. Die resultierende Bandbreite kann, insbesondere als 3db Grenze, beispielsweise basierend auf der maximalen Sendeleistung oder basierend auf einer mittleren Sendeleistung jeweils der beiden äußeren (im Sinne der Sendefrequenzen) Schallsendewandler Designfrequenzen bestimmt werden, wobei diese die Unter- und Obergrenze der Bandbreite des gesamten Schallsendearrays darstellen.

Aus Fig. 5 wird auch deutlich, wie das frequenzmodulierte Wasserschallsignal koordiniert ausgesendet werden kann. Weist das auszusendende Wasserschallsignal nicht nur eine Frequenz, sondern Signalanteile mit verschiedene Frequenzen auf, können die Signalanteile von verschiedenen Wasserschallsendewandlern ausgesendet werden. Insbesondere werden die Signalanteile von den Wasserschallsendewandlern ausgesendet, die für das Aussenden der entsprechenden Frequenz eines Signalanteils optimiert sind. So können Signalanteile mit einer Frequenz unterhalb des ersten Schnittpunkts 46a von dem ersten Wasserschallsendewandler, Signalanteile mit einer Frequenz zwischen dem ersten und dem zweiten Schnittpunkten 46a und 46b von dem zweiten Wasserschallsendewandler und Signalanteile mit einer Frequenz größer als die Frequenz in dem zweiten Schnittpunkt 46b von dem dritten Wasserschallsendewandler ausgesendet werden.

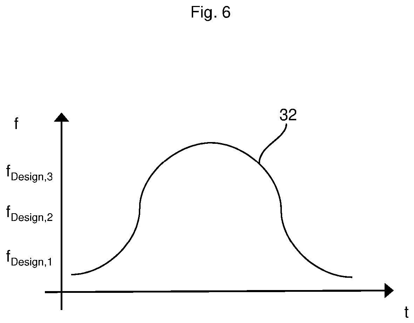

Fig. 6 zeigt ein schematisches frequenzmoduliertes Sendesignal 32 in einem Diagramm der Frequenz (f) über der Zeit (t). Hier wird verdeutlicht, dass das frequenzmodulierte Sendesignal 32 die in Fig. 5 gezeigten Designfrequenzen nacheinander durchlaufen kann.

Die offenbarten (Wasser-) Schallsendewandler sowie die (Wasser-) Schallempfänger in den Antennen, sind für den Einsatz unter Wasser, insbesondere im Meer, ausgelegt. Die Schallempfänger können Wasserschall in ein dem Schalldruck entsprechendes elektrisches Signal (z.B. Spannung oder Strom), das Wasserschallsignal, umwandeln. Die Schallsendewandler können eine anliegende elektrische Spannung in Wasserschall umwandeln. Typischerweise werden als Schallsendewandler und als Schallempfänger jeweils Wasserschallwandler verwendet, die je nach Ansteuerung als Schallsendewandler oder Schallempfänger verwendet werden. Als sensorisches Material können die Schallwandler, insbesondere die Schallsendewandler und die Schallempfänger, ein piezoelektrisches Material, beispielsweise eine Piezokeramik, aufweisen. Die Schallwandler können für (Aktiv- und/oder Passiv-) Sonar (sound navigation and ranging, dt.: Schall-Navigation und -Entfernungsbestimmung) eingesetzt werden. Die Schallwandler sind bevorzugt nicht für medizinische Anwendungen geeignet bzw. werden nicht für medizinische Anwendungen eingesetzt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: Schallsendearray
- 22: Wasserschallsignal
- 24: Schallsendewandler
- 26: Abstand zwischen den Schallsendewandlern
- 28: Signalgenerator
- 30: Kommunikationsprozessor
- 32: Sendesignal
- 34: kodierte Nachricht
- 36: Wasserfahrzeug
- 38: Sonarempfangsantenne
- 40: Schleppantenne
- 42: Abstrahlcharakteristik
- 44: Bandbreite
- 46: Schnittpunkt der Abstrahlcharakteristiken
- 48: resultierende Abstrahlcharakteristik
- 50: Fenstergrenze

## Patentansprüche

1. Hydroakustisches Schallsenderarray (20) zum Aussenden eines frequenzmodulierten Wasserschallsignals (22) mit folgenden Merkmalen:
eine Mehrzahl von Schallsendewandlern umfassend einen ersten Schallsendewandler (24a) und einen zweiten Schallsendewandler (24b);
wobei der erste Schallsendewandler (24a) eine erste Designfrequenz aufweist und wobei der zweite Schallsendewandler (24b, 24c) eine zweite Designfrequenz aufweist, wobei sich die erste Designfrequenz von der zweiten Designfrequenz unterscheidet;
wobei ein Abstand zwischen dem ersten Schallsendewandler und dem zweiten Schallsendewandler derart gewählt ist, dass der Abstand zwischen der halben Wellenlänge der ersten Designfrequenz und der halben Wellenlänge der zweiten Designfrequenz liegt;
wobei die Schallsendewandler (24) der Mehrzahl von Schallsendewandlern senkrecht zu einer Hauptabstrahlrichtung des Schallsendearrays (20) oder des ersten und/oder des zweiten Schallsendewandlers (24a, 24b) angeordnet sind;
wobei der Abstand (26a, 26b) senkrecht zu der Hauptabstrahlrichtung des Schallsendearrays oder senkrecht zu der Hauptabstrahlrichtung des ersten Schallsendewandlers bzw. ergänzend oder alternativ des zweiten Schallsendewandlers gemessen ist.

2. Hydroakustisches Schallsenderarray (20) gemäß Anspruch 1,
wobei der Abstand zwischen dem ersten Schallsendewandler und dem zweiten Schallsendewandler der halben Wellenlänge einer Frequenz entspricht, bei der sich eine Abstrahlcharakteristik des ersten Schallsendewandlers und des zweiten Schallsendewandlers über der Sendefrequenz schneiden, wobei der Abstand eine Abweichung von bis zu 20% der Wellenlänge der Frequenz der Abstrahlcharakteristiken in dem Schnittpunkt aufweist.

3. Hydroakustisches Schallsenderarray (20) gemäß einem der vorherigen Ansprüche,
wobei die Mehrzahl von Schallsendewandlern einen dritten Schallsendewandler (24c) umfasst;
wobei der Abstand des ersten Schallsendewandlers (24a) und des zweiten Schallsendewandlers (24b) als erster Abstand (26a) bezeichnet wird;
wobei der zweite Schallsendewandler (24b) und dritte Schallsendewandler (24c) einen zweiten Abstand (26b) zueinander aufweisen;
wobei der erste Abstand (26a) und der zweite Abstand (26b) voneinander verschieden sind.

4. Hydroakustisches Schallsenderarray (20) gemäß Anspruch 3,
wobei sich der erste Schallsendewandler (24a) in seiner Designfrequenz von dem zweiten und dem dritten Schallsendewandler (24b, 24c) unterscheidet.

5. Hydroakustisches Schallsenderarray (20) gemäß einem der Ansprüche 3 oder 4,
wobei der zweite Abstand der halben Wellenlänge einer Frequenz entspricht, bei der sich eine Abstrahlcharakteristik des zweiten Schallsendewandlers und des dritten Schallsendewandlers über der Sendefrequenz schneiden, wobei der Abstand eine Abweichung von bis zu 20% der Wellenlänge der Frequenz der Abstrahlcharakteristiken in dem Schnittpunkt aufweist.

6. Hydroakustisches Schallsenderarray (20) gemäß einem der Ansprüche 3 bis 5,
wobei der zweite Abstand (26b) im Wesentlichen der halben Wellenlänge einer Designfrequenz des zweiten und des dritten Schallsendewandlers entspricht, wenn der zweite Schallsendewandler und der dritte Schallsendewandler identisch sind, d.h. insbesondere die gleiche Abstrahlcharakteristik aufweisen.

7. Hydroakustisches Schallsenderarray (20) gemäß einem der vorherigen Ansprüche umfassend einen Signalgenerator (28);
wobei der Signalgenerator (28) ausgebildet ist, die Schallsendewandler (24) der Mehrzahl von Schallsendewandlern mit einem frequenzmodulierten Sendesignal (32) anzusteuern, so dass die Schallsendewandler (24) das frequenzmodulierte Wasserschallsignal (22) koordiniert aussenden.

8. Hydroakustisches Schallsenderarray (20) gemäß einem der vorherigen Ansprüche umfassend einen Kommunikationsprozessor (30);
wobei der Kommunikationsprozessor (30) ausgebildet ist, eine Nachricht (34) zu kodieren und die Schallsendewandler (24) der Mehrzahl von Schallsendewandlern derart ansteuern, dass die Schallsendewandler (24) die kodierte Nachricht (34) als frequenzmoduliertes Wasserschallsignal (22) aussenden.

9. Hydroakustisches Schallsenderarray (20) gemäß einem der vorherigen Ansprüche;
wobei zwei benachbarte Schallsendewandler der Mehrzahl von Schallsendewandlern derart ausgewählt werden, dass zumindest ein Wendepunkt einer zu einem der beiden Schallsendewandler zugehörigen Abstrahlcharakteristik oder auch jeweils ein Wendepunkt der zu den zwei benachbarten Schallsendewandlern zugehörigen Abstrahlcharakteristiken innerhalb eines vorbestimmten Fensters (50, 50') um den Schnittpunkt der beiden Abstrahlcharakteristiken liegt oder liegen, wobei das Fenster eine Größe von ±10%, bevorzugt ±5%, besonders bevorzugt ±2% der Differenz der Designfrequenzen der beiden benachbarten Schallsendewandler um den Schnittpunkt aufweist.

10. Hydroakustisches Schallsenderarray (20) gemäß einem der vorherigen Ansprüche;
wobei der erste Schallsendewandler (24a) einen ersten Durchmesser aufweist, um die erste Designfrequenz einzustellen und wobei der zweite Schallsendewandler (24b, 24c) einen zweiten Durchmesser aufweist, um die zweite Designfrequenz einzustellen, wobei sich die der erste Durchmesser von dem zweiten Durchmesser unterscheidet.

11. Wasserfahrzeug (36) umfassend
das hydroakustische Schallsendearray gemäß einem der vorherigen Ansprüche;
eine im vorderen Bereich des Wasserfahrzeugs (36) angeordnete Sonarempfangsantenne und eine Schleppantenne, die jeweils ausgebildet sind, das frequenzmodulierte Wasserschallsignal (22) zu empfangen.

12. Verfahren zur Herstellung eines Schallsendearrays (20) zum Aussenden eines frequenzmodulierten Wasserschallsignals (22) mit folgenden Schritten:
- Bereitstellen einer Mehrzahl von Schallsendewandlern umfassend einen ersten Schallsendewandler (24a) und einen zweiten Schallsendewandler (24b) wobei der erste Schallsendewandler (24a) eine erste Designfrequenz aufweist und wobei der zweite Schallsendewandler (24b, 24c) eine zweite Designfrequenz aufweist, wobei sich die erste Designfrequenz von der zweiten Designfrequenz unterscheidet;
- Anordnen der Schallsendewandler (24) der Mehrzahl von Schallsendewandlern senkrecht zu einer Hauptabstrahlrichtung des Schallsendearrays (20) oder des ersten und/oder des zweiten Schallsendewandlers (24a, 24b);
- Anordnen des ersten Schallsendewandlers und des zweiten Schallsendewandlers in einem Abstand zueinander, der derart gewählt ist, dass der Abstand zwischen der halben Wellenlänge der ersten Designfrequenz und der halben Wellenlänge der zweiten Designfrequenz liegt, wobei der Abstand (26a, 26b) senkrecht zu der Hauptabstrahlrichtung des Schallsendearrays oder senkrecht zu der Hauptabstrahlrichtung des ersten Schallsendewandlers bzw. ergänzend oder alternativ des zweiten Schallsendewandlers gemessen ist.

## Claims

1. Hydroacoustic sound transmitter array (20) for transmitting a frequency-modulated underwater sound signal (22), comprising the following features:
a plurality of sound transmitting transducers comprising a first sound transmitting transducer (24a) and a second sound transmitting transducer (24b);
wherein the first sound transmitting transducer (24a) has a first design frequency and wherein the second sound transmitting transducer (24b, 24c) has a second design frequency, wherein the first design frequency differs from the second design frequency;
wherein a spacing between the first sound transmitting transducer and the second sound transmitting transducer is selected such that the spacing lies between half the wavelength of the first design frequency and half the wavelength of the second design frequency;
wherein the sound transmitting transducers (24) of the plurality of sound transmitting transducers are arranged perpendicular to a main radiation direction of the sound transmitter array (20) or of the first and/or the second sound transmitting transducer (24a, 24b);
wherein the spacing (26a, 26b) is measured perpendicular to the main radiation direction of the sound transmitter array or perpendicular to the main radiation direction of the first sound transmitting transducer or, additionally or alternatively, of the second sound transmitting transducer.

2. Hydroacoustic sound transmitter array (20) according to claim 1,
wherein the spacing between the first sound transmitting transducer and the second sound transmitting transducer corresponds to half the wavelength of a frequency at which a radiation characteristic of the first sound transmitting transducer and of the second sound transmitting transducer intersect over the transmission frequency, wherein the spacing has a deviation of up to 20% of the wavelength of the frequency of the radiation characteristics at the point of intersection.

3. Hydroacoustic sound transmitter array (20) according to one of the preceding claims,
wherein the plurality of sound transmitting transducers comprises a third sound transmitting transducer (24c);
wherein the spacing of the first sound transmitting transducer (24a) and the second sound transmitting transducer (24b) is referred to as a first spacing (26a);
wherein the second sound transmitting transducer (24b) and the third sound transmitting transducer (24c) have a second spacing (26b) from one another;
wherein the first spacing (26a) and the second spacing (26b) differ from one another.

4. Hydroacoustic sound transmitter array (20) according to claim 3,
wherein the first sound transmitting transducer (24a) differs in its design frequency from the second and the third sound transmitting transducer (24b, 24c).

5. Hydroacoustic sound transmitter array (20) according to one of claims 3 or 4,
wherein the second spacing corresponds to half the wavelength of a frequency at which a radiation characteristic of the second sound transmitting transducer and of the third sound transmitting transducer intersect over the transmission frequency, wherein the spacing has a deviation of up to 20% of the wavelength of the frequency of the radiation characteristics at the point of intersection.

6. Hydroacoustic sound transmitter array (20) according to one of claims 3 to 5,
wherein the second spacing (26b) substantially corresponds to half the wavelength of a design frequency of the second and the third sound transmitting transducer if the second sound transmitting transducer and the third sound transmitting transducer are identical, i.e. in particular have the same radiation characteristic.

7. Hydroacoustic sound transmitter array (20) according to one of the preceding claims, comprising a signal generator (28);
wherein the signal generator (28) is configured to drive the sound transmitting transducers (24) of the plurality of sound transmitting transducers with a frequency-modulated transmission signal (32), such that the sound transmitting transducers (24) transmit the frequency-modulated underwater sound signal (22) in a coordinated manner.

8. Hydroacoustic sound transmitter array (20) according to one of the preceding claims, comprising a communication processor (30);
wherein the communication processor (30) is configured to encode a message (34) and to drive the sound transmitting transducers (24) of the plurality of sound transmitting transducers such that the sound transmitting transducers (24) transmit the encoded message (34) as the frequency-modulated underwater sound signal (22).

9. Hydroacoustic sound transmitter array (20) according to one of the preceding claims;
wherein two adjacent sound transmitting transducers of the plurality of sound transmitting transducers are selected such that at least one point of inflection of a radiation characteristic associated with one of the two sound transmitting transducers, or in each case one point of inflection of the radiation characteristics associated with the two adjacent sound transmitting transducers, lies or lie within a predetermined window (50, 50') around the point of intersection of the two radiation characteristics, wherein the window has a size of ±10%, preferably ±5%, particularly preferably ±2%, of the difference between the design frequencies of the two adjacent sound transmitting transducers around the point of intersection.

10. Hydroacoustic sound transmitter array (20) according to one of the preceding claims;
wherein the first sound transmitting transducer (24a) has a first diameter in order to set the first design frequency and wherein the second sound transmitting transducer (24b, 24c) has a second diameter in order to set the second design frequency, wherein the first diameter differs from the second diameter.

11. Watercraft (36) comprising
the hydroacoustic sound transmitter array according to one of the preceding claims;
a sonar receiving antenna arranged in the forward region of the watercraft (36) and a towed antenna, each configured to receive the frequency-modulated underwater sound signal (22).

12. Method for manufacturing a sound transmitter array (20) for transmitting a frequency-modulated underwater sound signal (22), comprising the following steps:
• providing a plurality of sound transmitting transducers comprising a first sound transmitting transducer (24a) and a second sound transmitting transducer (24b), wherein the first sound transmitting transducer (24a) has a first design frequency and wherein the second sound transmitting transducer (24b, 24c) has a second design frequency, wherein the first design frequency differs from the second design frequency;
• arranging the sound transmitting transducers (24) of the plurality of sound transmitting transducers perpendicular to a main radiation direction of the sound transmitter array (20) or of the first and/or the second sound transmitting transducer (24a, 24b);
• arranging the first sound transmitting transducer and the second sound transmitting transducer at a spacing from one another, the spacing being selected such that the spacing lies between half the wavelength of the first design frequency and half the wavelength of the second design frequency, wherein the spacing (26a, 26b) is measured perpendicular to the main radiation direction of the sound transmitter array or perpendicular to the main radiation direction of the first sound transmitting transducer or, additionally or alternatively, of the second sound transmitting transducer.

## Revendications

1. Réseau hydroacoustique d'émetteurs acoustiques (20) destiné à émettre un signal acoustique sous-marin modulé en fréquence (22), comprenant les caractéristiques suivantes:
une pluralité de transducteurs émetteurs acoustiques comprenant un premier transducteur émetteur acoustique (24a) et un deuxième transducteur émetteur acoustique (24b) ;
dans lequel le premier transducteur émetteur acoustique (24a) présente une première fréquence de conception et dans lequel le deuxième transducteur émetteur acoustique (24b, 24c) présente une deuxième fréquence de conception, la première fréquence de conception étant différente de la deuxième fréquence de conception ;
dans lequel une distance entre le premier transducteur émetteur acoustique et le deuxième transducteur émetteur acoustique est choisie de telle sorte que la distance soit comprise entre la demi-longueur d'onde de la première fréquence de conception et la demi-longueur d'onde de la deuxième fréquence de conception ;
dans lequel les transducteurs émetteurs acoustiques (24) de la pluralité de transducteurs émetteurs acoustiques sont disposés perpendiculairement à une direction principale de rayonnement du réseau d'émetteurs acoustiques (20) ou du premier et/ou du deuxième transducteur émetteur acoustique (24a, 24b) ;
dans lequel la distance (26a, 26b) est mesurée perpendiculairement à la direction principale de rayonnement du réseau d'émetteurs acoustiques ou perpendiculairement à la direction principale de rayonnement du premier transducteur émetteur acoustique ou, en complément ou en alternative, du deuxième transducteur émetteur acoustique.

2. Réseau hydroacoustique d'émetteurs acoustiques (20) selon la revendication 1,
dans lequel la distance entre le premier transducteur émetteur acoustique et le deuxième transducteur émetteur acoustique correspond à la demi-longueur d'onde d'une fréquence à laquelle une caractéristique de rayonnement du premier transducteur émetteur acoustique et du deuxième transducteur émetteur acoustique se croisent en fonction de la fréquence d'émission, la distance présentant un écart pouvant atteindre 20 % de la longueur d'onde de la fréquence des caractéristiques de rayonnement au point d'intersection.

3. Réseau hydroacoustique d'émetteurs acoustiques (20) selon l'une des revendications précédentes,
dans lequel la pluralité de transducteurs émetteurs acoustiques comprend un troisième transducteur émetteur acoustique (24c) ;
dans lequel la distance entre le premier transducteur émetteur acoustique (24a) et le deuxième transducteur émetteur acoustique (24b) est désignée comme une première distance (26a) ;
dans lequel le deuxième transducteur émetteur acoustique (24b) et le troisième transducteur émetteur acoustique (24c) présentent une deuxième distance (26b) entre eux ;
dans lequel la première distance (26a) et la deuxième distance (26b) sont différentes l'une de l'autre.

4. Réseau hydroacoustique d'émetteurs acoustiques (20) selon la revendication 3,
dans lequel le premier transducteur émetteur acoustique (24a) se distingue, par sa fréquence de conception, du deuxième et du troisième transducteur émetteur acoustique (24b, 24c).

5. Réseau hydroacoustique d'émetteurs acoustiques (20) selon l'une des revendications 3 ou 4
dans lequel la deuxième distance correspond à la demi-longueur d'onde d'une fréquence à laquelle une caractéristique de rayonnement du deuxième transducteur émetteur acoustique et du troisième transducteur émetteur acoustique se croisent en fonction de la fréquence d'émission, la distance présentant un écart pouvant atteindre 20 % de la longueur d'onde de la fréquence des caractéristiques de rayonnement au point d'intersection.

6. Réseau hydroacoustique d'émetteurs acoustiques (20) selon l'une des revendications 3 à 5
dans lequel la deuxième distance (26b) correspond essentiellement à la demi-longueur d'onde d'une fréquence de conception du deuxième et du troisième transducteur émetteur acoustique lorsque le deuxième transducteur émetteur acoustique et le troisième transducteur émetteur acoustique sont identiques, c'est-à-dire présentent en particulier la même caractéristique de rayonnement.

7. Réseau hydroacoustique d'émetteurs acoustiques (20) selon l'une des revendications précédentes, comprenant un générateur de signaux (28);
dans lequel le générateur de signaux (28) est configuré pour commander les transducteurs émetteurs acoustiques (24) de la pluralité de transducteurs émetteurs acoustiques au moyen d'un signal d'émission modulé en fréquence (32), de sorte que les transducteurs émetteurs acoustiques (24) émettent de manière coordonnée le signal acoustique sous-marin modulé en fréquence (22).

8. Réseau hydroacoustique d'émetteurs acoustiques (20) selon l'une des revendications précédentes, comprenant un processeur de communication (30); dans lequel le processeur de communication (30) est configuré pour coder un message (34) et commander les transducteurs émetteurs acoustiques (24) de la pluralité de transducteurs émetteurs acoustiques de telle sorte que les transducteurs émetteurs acoustiques (24) émettent le message codé (34) sous la forme du signal acoustique sous-marin modulé en fréquence (22).

9. Réseau hydroacoustique d'émetteurs acoustiques (20) selon l'une des revendications précédentes;
dans lequel deux transducteurs émetteurs acoustiques adjacents de la pluralité de transducteurs émetteurs acoustiques sont sélectionnés de telle sorte qu'au moins un point d'inflexion d'une caractéristique de rayonnement associée à l'un des deux transducteurs émetteurs acoustiques, ou respectivement un point d'inflexion des caractéristiques de rayonnement associées aux deux transducteurs émetteurs acoustiques adjacents, se situe ou se situent à l'intérieur d'une fenêtre prédéterminée (50, 50') autour du point d'intersection des deux caractéristiques de rayonnement, la fenêtre présentant une taille de ±10 %, de préférence ±5 %, et plus préférablement ±2 %, de la différence entre les fréquences de conception des deux transducteurs émetteurs acoustiques adjacents autour du point d'intersection.

10. Réseau hydroacoustique d'émetteurs acoustiques (20) selon l'une des revendications précédentes;
dans lequel le premier transducteur émetteur acoustique (24a) présente un premier diamètre afin de régler la première fréquence de conception et dans lequel le deuxième transducteur émetteur acoustique (24b, 24c) présente un deuxième diamètre afin de régler la deuxième fréquence de conception, le premier diamètre étant différent du deuxième diamètre.

11. Véhicule aquatique (36) comprenant
le réseau hydroacoustique d'émetteurs acoustiques selon l'une des revendications précédentes ;
une antenne de réception sonar disposée dans la partie avant du véhicule aquatique (36) et une antenne remorquée, qui sont chacune configurées pour recevoir le signal acoustique sous-marin modulé en fréquence (22).

12. Procédé de fabrication d'un réseau d'émetteurs acoustiques (20) destiné à émettre un signal acoustique sous-marin modulé en fréquence (22), comprenant les étapes suivantes:
- mise à disposition d'une pluralité de transducteurs émetteurs acoustiques comprenant un premier transducteur émetteur acoustique (24a) et un deuxième transducteur émetteur acoustique (24b), le premier transducteur émetteur acoustique (24a) présentant une première fréquence de conception et le deuxième transducteur émetteur acoustique (24b, 24c) présentant une deuxième fréquence de conception, la première fréquence de conception étant différente de la deuxième fréquence de conception;
- disposition des transducteurs émetteurs acoustiques (24) de la pluralité de transducteurs émetteurs acoustiques perpendiculairement à une direction principale de rayonnement du réseau d'émetteurs acoustiques (20) ou du premier et/ou du deuxième transducteur émetteur acoustique (24a, 24b) ;
- disposition du premier transducteur émetteur acoustique et du deuxième transducteur émetteur acoustique à une distance l'un de l'autre, la distance étant choisie de telle sorte que la distance soit comprise entre la demi-longueur d'onde de la première fréquence de conception et la demi-longueur d'onde de la deuxième fréquence de conception, la distance (26a, 26b) étant mesurée perpendiculairement à la direction principale de rayonnement du réseau d'émetteurs acoustiques ou perpendiculairement à la direction principale de rayonnement du premier transducteur émetteur acoustique ou, en complément ou en alternative, du deuxième transducteur émetteur acoustique.
